**Europäisches Patentamt**

**European Patent Office**

**Office européen des brevets**

(19)

(11) Veröffentlichungsnummer: **0 134 971**
A2

# (12) EUROPÄISCHE PATENTANMELDUNG

(21) Anmeldenummer: **84107821.5**

(22) Anmeldetag: **05.07.84**

(51) Int. Cl.⁴: **E 05 D 15/10**

(30) Priorität: **01.08.83 DE 8322167 U**

(43) Veröffentlichungstag der Anmeldung:
**27.03.85 Patentblatt 85/13**

(84) Benannte Vertragsstaaten:
**CH DE GB LI NL**

(71) Anmelder: **KIEKERT GMBH & CO KG
Kettwiger Strasse 12-24
D-5628 Heiligenhaus(DE)**

(72) Erfinder: **Brandenburg, Rudolf
Spindecksfeld 81
D-4030 Ratingen 6(DE)**

(72) Erfinder: **Warmke, Werner
Zeppelinstrasse 53
D-4330 Mülheim-Ruhr(DE)**

(74) Vertreter: **Götz, Friedrich, Dipl.-Phys.
Tulpenweg 15
D-5628 Heiligenhaus(DE)**

(54) **Schwenkschiebetüraufhängung für Fahrzeuge.**

(57) Die Erfindung betrifft eine Schwenkschiebetüraufhängung für Fahrzeuge mit einer das Türblatt tragenden und mittels Parallelogrammlenkern aus der Karosserieebene herausschwenkbaren Teleskopführungsschiene, wobei die Parallelogrammlenker über biegesteife Lager an einem Träger des Fahrzeugdaches aufgehängt sind.

Bei den bisher bekannt gewordenen Schwenkschiebetüraufhängungen hat sich herausgestellt, daß das Einjustieren der mit dieser Aufhängung ausgerüsteten Tür im nicht verwindungsfreien Wagenkasten erhebliche Schwierigkeiten bereitete.

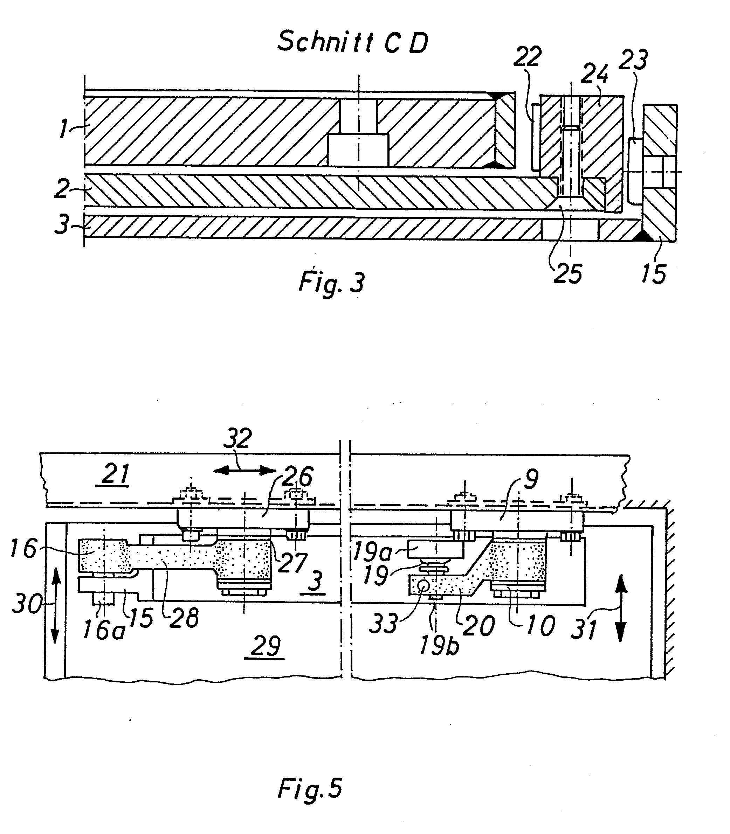

Der Erfindung liegt Aufgabe zugrunde, den Einbau und das Einjustieren zu vereinfachen. Dies gelingt dadurch, daß entsprechend Fig. 5 die Parallelogrammlenker 20, 28 über höhenverstellbare Kugelgelenke 16, 19 mit der äußeren Teleskopführungsschiene 3 verbunden sind.

*Fig.5*

EP 0 134 971 A2

## Schwenkschiebetüraufhängung für Fahrzeuge

### Technisches Gebiet

Die Erfindung bezieht sich auf eine Schwenkschiebetüraufhängung für Fahrzeuge mit einer das Türblatt tragenden und mittels Parallelogrammlenkern aus der Karosserieebene herausschwenkbaren Teleskopführungsschiene, wobei die Parallelogrammlenker über biegesteife Lager an einem Träger des Fahrzeugdaches aufgehängt sind.

### Stand der Technik

Bei bekannten Schwenkschiebetüraufhängungen mit Teleskopschiene, Parallelogrammlenkern und zusätzlichen Führungselementen sind die Parallelogrammlenker grundsätzlich mit biegesteifen Bolzenlagern an einem Träger im Dachbereich des Fahrzeuges aufgehängt. Für die Anbindung der Parallelogrammlenker an das mit dem Türblatt verbundene Teleskopschienensystem liegen verschiedene Lösungen vor. So ist es bekannt, die Lenker unmittelbar in Gelenkkugeln übergehen zu lassen, deren Lagerpfannen auf dem oberen Schenkel der äußeren Teleskopschiene festgeschweißt sind.

Weiterhin ist es Stand der Technik, bei gleicher Lenkergestaltung die Lagerpfannen auf dem Mittelschenkel der äußeren Teleskopschiene festzuschweißen. Diese Konstruktion gestattet eine Verringerung der Bauhöhe.

In weiterer Abwandlung dieser Konstruktion wurde ein Vorschlag veröffentlicht, nach dem wenigstens ein Kugelgelenk durch ein

0134971

biegesteifes Bolzengelenk zu ersetzen ist. Es sollte damit verhindert werden, daß sich die Teleskopführung um ihre Längsachse gegenüber der Türebene verdreht.

Bei allen diesen Bauformen hat sich jedoch herausgestellt, daß damit das Einjustieren der Tür im nicht verwindungsfreien Wagenkasten erhebliche Schwierigkeiten bereitete. Für die Justiervorgänge benötigte man nämlich eine Reihe von Unterlegscheiben und Keilscheiben, die jeweils nach dem Lösen der Befestigungsschrauben über den biegesteifen Lenkerlagern eingebaut werden mußten. Erst nach dem Festziehen der Schrauben ließ sich dann feststellen, ob die Sollmaße erreicht wurden. War das nicht der Fall, mußte die ganze Prozedur wiederholt werden.

## Darstellung der Erfindung

Der Erfindung liegt die Aufgabe zugrunde, den Türeinbau und die Einjustierung zu vereinfachen und die Übertragung von Verwindungen auf die Teleskopschiene zu verhindern.

Diese Aufgabe wird dadurch gelöst, daß die Parallelogrammlenker über höhenverstellbare Kugelgelenke mit der äußeren Teleskopführungsschiene verbunden sind.

## Beschreibung der Zeichnungen

Ein Ausführungsbeispiel der Erfindung wird anhand von Fig. 1 bis 5 der Zeichnung dargestellt.

Fig. 1   zeigt eine verkürzte Seitenansicht der Teleskopführung,

Fig. 2   einen Schnitt entlang der Linie AB in Fig. 1,

Fig. 3   einen Schnitt entlang der Linie CD in Fig. 1,

Fig. 4   eine Draufsicht auf die Teleskopführung und die Parallelogrammlenker,

Fig. 5   eine Innenansicht der Türaufhängung.

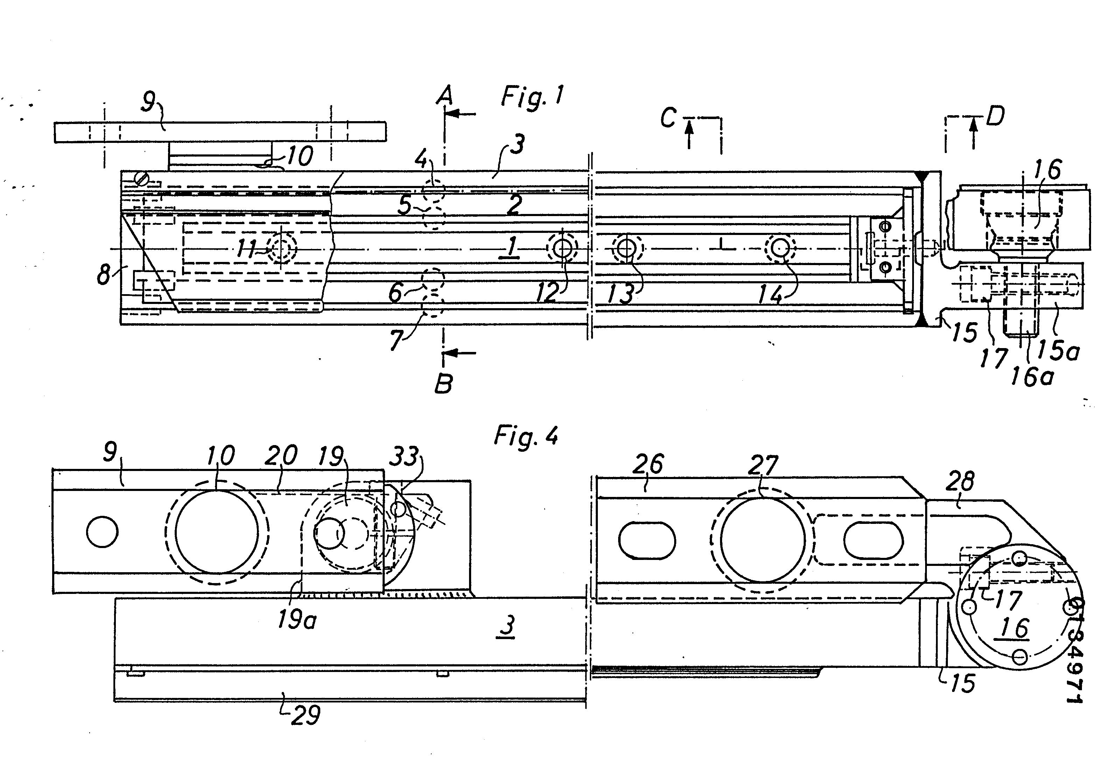

In Fig. 1 ist mit 1 die Innenschiene, mit 2 die Mittelschiene und mit 3 die Außenschiene der Teleskopführung bezeichnet. Die dazwischen liegenden Lagerkugelreihen sind mit 4, 5, 6 und 7 angedeutet. Die Innenschiene 3 trägt am linken Ende eine Anschlagplatte 8. Darüber liegt eine Befestigungsplatte 9, mit der das Lager 10 des einen Lenkers am Fahrzeugdach fixiert wird. Die Innenschiene 1 weist Gewindelöcher, 11, 12, 13, 14 auf, die der Aufhängung des Türblattes dienen. Mit dem rechten Ende der Außenschiene 3 ist eine winkelförmige Haltekonsole 15 verschweißt, die ein Kugelgelenk 16 trägt. Als einstellbare Verbindung dient ein Gewindebolzen 16a, der in einer Gewindebohrung des waagerechten Schenkels 15a der Haltekonsole 15 ruht. Das Teil 15a ist geschlitzt und trägt eine Klemmschraube 17.

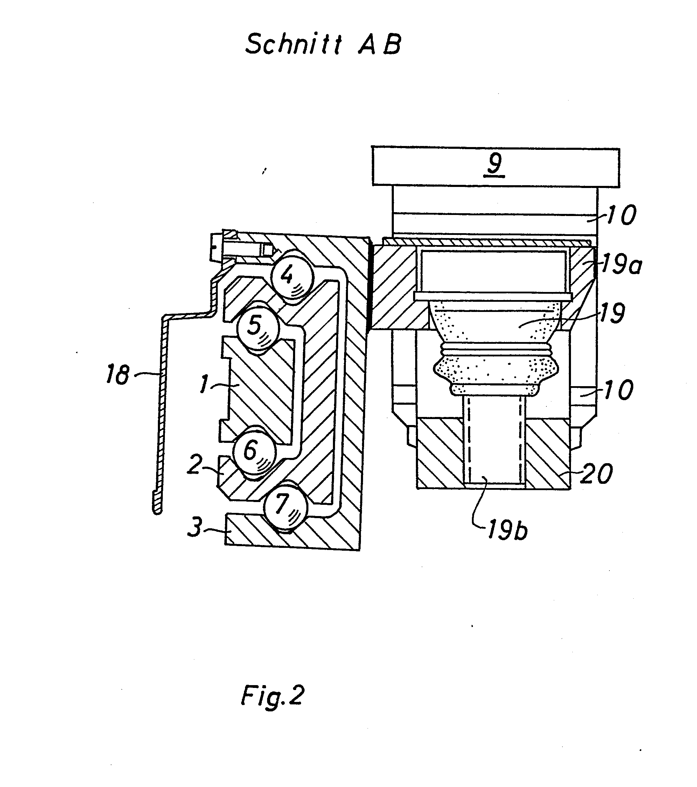

Fig. 2 zeigt einen Schnitt entlang der Linie AB in Fig. 1. Man erkennt die Form der Innenschiene 1, der Mittelschiene 2 und der Außenschiene 3, zwischen welchen die Lagerkugelreihen 4 - 7 angeordnet sind. An der Außenschiene 3 ist ein abgekantetes Abdeckblech 18 befestigt. Die Rückseite der Aussenschiene 3 ist mit dem Gehäuse 19a eines Kugelgelenkes 19 verbunden. Ein Gewindebolzen 19b dieses Gelenkes ist mit einem Lenker 20 verschraubt, der wiederum über das Lager 10 und die Befestigungsplatte 9 am Fahrzeugdach aufgehängt ist.

Fig. 3 stellt den Schnitt entlang der abgesetzten Linie CD in Fig. 1 dar. Man erkennt im wesentlichen die Anordnung von Stoßdämpfern 22 und 23 zwischen der Innenschiene 1, der Mittelschiene 2 und der Außenschiene 3. Der Stoßdämpfer 22 sitzt in einem Quader 24, der durch Schrauben 25 mit der Mittelschiene 2 verbunden ist.

Aus der verkürzten Draufsicht nach Fig. 4 ergibt sich im linken Teil die Anordnung der Befestigungsplatte 9, des Lagers 10, des Lenkers 20 und des Kugelgelenkes 19, dessen Gehäuse 19a mit der Außenschiene 3 verschweißt ist. Mit 33 ist eine Klemmschraube angedeutet. Im rechten Teil der Fig. 4

- 4 -

0134971

erkennt man eine mit Langlöchern versehene Befestigungsplatte 26, ein Lager 27, einen Lenker 28 und das Kugelgelenk 16. Letzteres ist über die Konsole 15 mit der Außenschiene 3 verbunden. Mit 17 ist die Klemmschraube bezeichnet, mit der die optimale Höheneinstellung des Kugelgelenkes 16 fixiert werden kann. Die Teleskopführungsschiene 3
und das davor angedeutete Türblatt 29 sind im eingeschwenkten Zustand gezeichnet. Beim Ausschwenken drehen sich die
Parallelogrammlenker 20 und 28 um 90° im Uhrzeigersinn, bevor dann das Türblatt 29 mit Hilfe des Teleskopführungssystems nach links ausgefahren wird.

Fig. 5 zeigt die Innenansicht der Türaufhängung mit dem Türblatt 29, der äußeren Teleskopschiene 3, den mit einem Dachträger 21 verschraubten Befestigungsplatten 9 und 26, den
Lagern 10 und 27, den Lenkern 20 und 28 sowie den Kugelgelenken 16 und 19. Über die Gewindezapfen 16a und 19b kann
sehr leicht eine Feinjustierung der Höhe und eine Senkrechtstellung des Türblattes vorgenommen werden. Diese Verstellbarkeit wird durch die senkrechten Pfeile 30 und 31 angedeutet. Eine weitere Justiermöglichkeit in der Waagerechten ergibt sich entsprechend dem Pfeil 32 durch die Langlochplatte
26.
Die Parallelogrammlenker 20 und 28 sind über biegesteife
Bolzenlager 10 und 27 am Dachträger 21 aufgehängt. Der
Kraftübertragung zwischen den Lenkern 20, 28 und der Teleskopschiene 3 dienen die Kugelgelenke 16 und 19, die den
großen Vorteil aufweisen, daß Verwindungen im Dachbereich,
wie sie während der Fahrt auftreten können, nicht auf das
Teleskopsystem übertragen werden.

Bei dem in Fig. 1 - 5 dargestellten bevorzugten Ausführungsbeispiel bildet die Konsole 15 zugleich den ohnehin erforderlichen Endanschlag für die ausziehbare Schiene 2 und damit indirekt auch für die Schiene 1.

<u>Bester Weg zur Ausführung der Erfindung</u>

Die Erfindung ermöglicht es, die komplett vormontierte Tür in die Karosserieöffnung einzusetzen, die Befestigungsschrauben unter Verwendung einiger Unterlegscheiben zur Grobjustierung anzubringen und in kürzester Zeit über die Gewindebolzen der Kugelgelenke die Höhe und die Vertikale genau einzustellen. Nach Beendigung der Feinjustierung sind dann liediglich noch die Klemmschrauben anzuziehen.

<u>Gewerbliche Verwertbarkeit</u>

Die neuartige Schwenkschiebetüraufhängung ist dazu bestimmt, in Fahrzeugen für die Personenbeförderung, insbesondere in Omnibussen und Schienenfahrzeugen eingesetzt zu werden. Das Hauptanwendungsgebiet ist der Nahverkehrsbereich, wo es auf schnelles und bequemes Ein- und Aussteigen großer Fahrgastmengen ankommt.

- 7 -

0134971

## Bezugszeichenliste

| | |
|---|---|
| 1 | Innenschiene |
| 2 | Mittelschiene |
| 3 | Außenschiene |
| 4 - 7 | Lagerkugelreihen |
| 8 | Anschlagplatte |
| 9 | Befestigungsplatte |
| 10 | Bolzenlager |
| 11 - 14 | Gewindelöcher |
| 15 | Haltekonsole |
| 15a | waagerechte Schenkel |
| 16 | Kugelgelenk |
| 16a | Gewindebolzen |
| 17 | Klemmschraube |
| 18 | Abdeckblech |
| 19 | Kugelgelenk |
| 19a | Gehäuse des Kugelgelenks |
| 19b | Gewindebolzen |
| 20 | Parallelogrammlenker |
| 21 | Dachträger |
| 22, 23 | Stoßdämpfer |
| 24 | Quader |
| 25 | Schrauben |
| 26 | Langlochplatte |
| 27 | Bolzenlager |
| 28 | Parallelogrammlenker |
| 29 | Türblatt |
| 30, 31 | senkrechte Pfeile |
| 32 | Pfeil |
| 33 | Klemmschraube |

Ansprüche

1. Schwenkschiebetüraufhängung für Fahrzeuge mit einer das Türblatt tragenden und mittels Parallelogrammlenkern aus der Karosserieebene herausschwenkbaren Telekopführungsschiene, wobei die Parallelogrammlenker über biegesteife Lager an einem Träger des Fahrzeugdaches aufgehängt sind, dadurch gekennzeichnet, daß die Parallelogrammlenker (20, 28) über höhenverstellbare Kugelgelenke (16, 19) mit der äußeren Teleskopführungsschiene (3) verbunden sind.

2. Schwenkschiebetüraufhängung nach Anspruch 1, dadurch gekennzeichnet, daß jedes Kugelgelenk (16, 19) einen Gewindebolzen (16a, 19b) aufweist, der höhenverstellbar in einer Haltekonsole (15) bzw. einem Parallelogrammlenker (20) ruht und dort mittels Klemmschraube (17, 33) feststellbar ist.

3. Schwenkschiebetüraufhängung nach Anspruch 2, dadurch gekennzeichnet, daß die Haltekonsole (15) des einen Kugelgelenkes (16) mit der Stirnseite der äußeren Teleskopführungsschiene (3) verbunden ist, während das Gehäuse (19a) des anderen Kugelgelenkes (19) mit der Rückseite der äußeren Teleskopführungsschiene (3) verschweißt ist.

Fig. 1

Fig. 4

Schnitt A B

Fig.2

0134971

## Schnitt C D

Fig. 3

Fig. 5